# EUROPEAN PATENT SPECIFICATION

(11) **EP 3 616 294 B1**
(45) Date of publication and mention of the grant of the patent: **28.04.2021**
(21) Application number: 18845363.3
(22) Date of filing: 21.12.2018
(51) Int. Cl.: H02J 5/00, H02J 7/00, B60L 53/31, B60L 53/50, H02G 1/02

(54) **ELECTRIC VEHICLE CHARGING STATION FOR CONNECTING TO HIGH OR EXTRA HIGH VOLTAGE TRANSMISSION LINE AND OPERATION METHOD THEREOF**
LADESTATION FÜR ELEKTROFAHRZEUGE ZUM ANSCHLUSS AN EINE HOCH- ODER HÖCHSTSPANNUNGSÜBERTRAGUNGSLEITUNG UND BETRIEBSVERFAHREN DAFÜR
STATION DE CHARGE DE VÉHICULE ÉLECTRIQUE POUR CONNEXION À UNE LIGNE DE TRANSMISSION HAUTE OU EXTRA HAUTE TENSION ET SON PROCÉDÉ DE FONCTIONNEMENT

(30) Priority: 22.12.2017 PT 2017110466
(43) Date of publication of application: 04.03.2020
(73) Proprietor: REN SERVIÇOS S A, 1749-061 Lisboa (PT)
(72) Inventor: PINHEIRO MARTINS, Jorge Filipe, 4470-855 Maia (PT); QUARESMA DOS SANTOS, André, Lisboa 1000-217 (PT); RUSSO CAROLA, Pedro Gonçalo, 2790-171 Carnaxide (PT)
(74) Representative: Patentree
(86) International application number: PCT/IB2018/060533
(87) International publication number: WO 2019/123424

(56) References cited:
- CN-U- 206 623 692
- US-A1- 2012 019 203
- US-A1- 2016 233 685
- Ge Grid Solutions ET AL: "Power voltage transformers*********************$--**", , 1 January 2015 (2015-01-01), XP055693726, Retrieved from the Internet: URL:http://www.gegridsolutions.com/product s/brochures/155650_168157_-Grid-AIS-L3-PVT -0052-2015_10-EN_lo.pdf [retrieved on 2020-05-11]

## Description

### Technical field

The present disclosure relates to a power supply electric vehicle charging station having a connection from high and extra high voltage networks of 60 kV to 800 kV.

### Background

The electrical vehicle charging station is a key infrastructure component for the transportation economy based on electrical energy.

The foreseen technical requirements of the charging stations include: large geographic coverage, enough power supply, economic efficiency, fast charging times and, high reliability and availability.

The installation of charging stations in large urban geographic areas has been solved by the available electrical distribution systems, with diminish additional investment. On the contrary, on rural and semi-urban geographic regions, the available electrical distribution system is weak or inexistent. The transmission network is present in these areas, where the transmission lines cross several roads and highways in numerous locations.

Normally, upsizing the local low voltage network to receive a electrical vehicle charging station has a domino effect that initiates a succession of similar upsizing of upstream network levels, in particular at the medium voltage level.

For example, document US 2017/0174090 A1 describes a utility tower for energy generation, management and distribution, the utility tower comprising: a vertical structure comprising: at least one energy storage, a communication network to communicate power requirements, power quality, power available or any combination thereof; a power source coupled to the at least one energy storage, a controller to calculate at least one power distribution criterion and to control the energy transfer from the at least one energy storage to one or more loads based on the at least one power distribution criterion. Optionally, the power source may be a renewable energy source or an electric grid. The disclosure of US 2017/0174090 A1 has the mentioned disadvantages.

Document US2012019203A1 discloses an energy storage system for a substation on an electrical power network. The energy storage system is coupled to receive and store electrical power. The stored electrical power may then be used to either charge vehicles or meeting the needs of other discretionary or interruptible loads with an electric propulsion. Document US2012019203A1 does not disclose using one or more power voltage transformers arranged to supply low voltage receiving power directly from a high or extra high voltage transmission line, bypassing medium voltage network distribution, where high or extra high voltage is 60 kV to 800 kV and low voltage is below 1 kV.

Document US2016233685A1 discloses a method and a device for controlling a local voltage. The method includes: obtaining a first voltage value of a high-voltage side bus in a local transformer substation; determining a control strategy according to a starting threshold value for a voltage enhancement control, a starting threshold value for an under-voltage load shedding and the first voltage value of the high-voltage side bus; and performing the control strategy to control a charging power of an electric vehicle charging station corresponding to the local transformer substation, so as to control the local voltage of the local transformer substation. Document US2016233685A1 does not disclose using one or more power voltage transformers arranged to supply low voltage receiving power directly from a high or extra high voltage transmission line, bypassing medium voltage network distribution, where high or extra high voltage is 60 kV to 800 kV and low voltage is below 1 kV.

Document CN206623692U discloses an electric wire network electric automobile charging station of different forms of energy, at least including an electric network electric automobile charging station of different forms of energy unit modules, including a distribution module, energy storage module, distributed forms of energy electrical cell, load, distributed forms of energy electrical cell and electric network control management system. Document CN206623692U does not disclose using one or more power voltage transformers arranged to supply low voltage receiving power directly from a high or extra high voltage transmission line, bypassing medium voltage network distribution, where high or extra high voltage is 60 kV to 800 kV and low voltage is below 1 kV.

These facts are disclosed in order to illustrate the technical problem addressed by the present disclosure.

### General Description

An electric vehicle charging station comprising a span of a high or extra high voltage transmission line of 60 kV to 800 kV according to the invention is characterised by the features recited in claim 1.

The present disclosure relates to a power supply electric vehicle charging station having a connection from high and extra high voltage networks of 60 kV to 800 kV networks, further in particular 72.5 kV to 400 kV networks.

The disclosed electric vehicle charging station for connecting to high or extra high voltage transmission line is able to directly power supply electric vehicle charging stations from extra high voltage networks and high voltage networks by tapping on the line span the three phases of the transmission lines to three-phase power voltage transformers with suitable voltage ratio, avoiding in between the need for a distribution network avoiding a medium voltage stage, for example 1 kV to 69 kV networks, used for distribution in urban and rural areas.

By direct feeding the vehicle charging station from the extra high voltage network, the available power to the station is only limited by the installed nominal power of the power voltage transformers and by the short-circuit power at the transmission line tap.

The system, according to an embodiment, is arranged into three main parts combined according to the power flow: (1) the charging station tap (CST); (2) the charging station substation (CSS) and; (3) the Charging station park (CSP).

The charging station tap CST, according to an embodiment, includes all high voltage equipment and protection and automation equipment required to safely connect the power transformers to the transmission line and to integrate the high power electric vehicle charging station load into the transmission system. Additionally, according to an embodiment, it includes the communication links and equipment used to remotely operate and monitor the high power electric vehicle charging station.

The charging station substation CSS, according to an embodiment, includes all power transformers that are part of the high voltage electric vehicle charging station and the several low voltage feeders that will power supply the electric vehicle charging stations. The charging station substation, according to an embodiment, also includes the transformers protection, the low voltage feeder's protection, automation equipment, metering equipment and, the low voltage auxiliary power supply system. Additionally, , according to an embodiment,it includes the local area communication network equipment and communication links. It provides remote communication access to electric vehicle charging stations.

The charging station park CSP, according to an embodiment, includes the electric vehicle charging station loads (CS) connected to the low voltage feeders provided by the CSS. The CS, according to an embodiment, are series connected to each feeder and its number is limited by the feeder maximum power.

It is disclosed an electric vehicle charging station for connecting to a span of a high or extra high voltage transmission line, comprising:
a tap for connecting to the span of the transmission line;
a substation fed from said tap comprising one or more power voltage transformers for transforming the high or extra high voltage to a low voltage for feeding electric vehicle chargers;
a plurality of electric vehicle chargers fed from said substation.

A power voltage transformer, or also referred to as an ASVT, auxiliary services voltage transformer, is an intermediate transformer between a power transformer and a voltage transformer, able to supply at least several kVA at low voltage receiving power directly from a high voltage transmission line, thus enabling the bypass of medium voltage network distribution.

This kind of transformers combines the voltage ratio and insulation features of a voltage transformer with the power features of a power transformer. They are currently used to provide power to remote substations or, occasionally, remote villages, but are not normally used to power other kinds of loads or have usual application outside these specific situations.

Examples of power voltage transformers (power VTs) are ABB TIP, in particular for 72.5 - 550 kV; ARTECHE UG, in particular for 72,5 a 550 kV; SIEMENS-TRENCH PSVS, in particular for 123 a 550 kV.

In an embodiment, the one or more power voltage transformers are station service voltage transformers, auxiliary service voltage transformers, or power VTs.

In an embodiment, said power voltage transformers comprise a three-phase star-delta power voltage transformers or a three-phase star-star power voltage transformers.

In an embodiment, said power voltage transformers comprise set of three one-phase power voltage transformers connected as star-delta or a set of three one-phase power voltage transformers connected as star-star.

In an embodiment, said tap comprises, for each phase of the transmission line:
an insulator for linking a first and a second interrupted conductor points of an interrupted transmission line conductor;
a drop conductor connected between the first interrupted conductor point and said substation;
a shunt connector connected between the second interrupted conductor point and a point of the drop conductor or connected between the first and second interrupted conductor points.

In an embodiment, said tap is arranged such that, by overhead power line maintenance operation, the substation-connected drop conductor is switchable:
from being connected with the first interrupted conductor point,
to being connected with the second interrupted conductor point,
and vice-versa.

In an embodiment, said tap is arranged such that, by overhead power line maintenance operation, the shunt conductor is switchable:
from being connected between the second interrupted conductor point and a point of the drop conductor,
to being connected between the first and second interrupted conductor points, or
to being disconnected and removed from said tap.

In an embodiment, said tap comprises, for each phase of the transmission line:
an insulator for linking a first and a second interrupted conductor points of an interrupted transmission line conductor;
a drop conductor connected between the first interrupted conductor point and said substation;
a shunt connector arranged such that, when connected, the interrupted parts of the transmission line conductor are connected between each other, and, when disconnected or removed, the interrupted parts of the transmission line conductor are disconnected between each other.

An embodiment comprises a line disconnect switch between the transmission line and the tap, for connecting and disconnecting the substation from the high or extra high voltage transmission line when required, independently of the transmission line being energised or not.

A line disconnect switch, or high-voltage disconnector is an off-load circuit disconnecting equipment that has a very low current-interruption capability, normally not being used for normal control of the circuit but for changing the network layout, for example, for maintenance or service purposes. In particular, a line disconnect switch normally lacks an electrical arc suppression mechanism and is intended to be used only after the network has been de-energised.

However, we have found that the stored magnetic energy in the voltage power transformer can be sufficiently low so that a line disconnect switch may have enough breaking and making capacity to interrupt and to establish the voltage power transformer ferromagnetic core current without the need of a circuit breaker.

An embodiment comprises a motorized earthing switch for securely earthing the charging station when it is electrically disconnected from the transmission line.

An embodiment comprises a current transformer for measuring the fault current in case of short-circuit in the high or extra high voltage part of the charging station.

An embodiment comprises an optical link interruption device for mounting in a transmission line tower adjacent to the tap span of the transmission line, wherein said device comprises a data communication optical link for linking the charging station and both ends of an interrupted optical link.

In an embodiment, the interrupted optical link is embedded within an earth conductor of the transmission line.

An embodiment comprises a local area communication network for data linking the charging station equipment.

An embodiment comprises protection equipment for protecting the charging station from electrical faults, protection equipment for protecting the transmission line from electrical faults of the charging station, and/or protection equipment for protecting the electric vehicle chargers from electrical faults.

An embodiment comprises data communication links for monitoring and operating remotely the charging station.

### Brief Description of the Drawings

The following figures provide preferred embodiments for illustrating the description and should not be seen as limiting the scope of the invention.

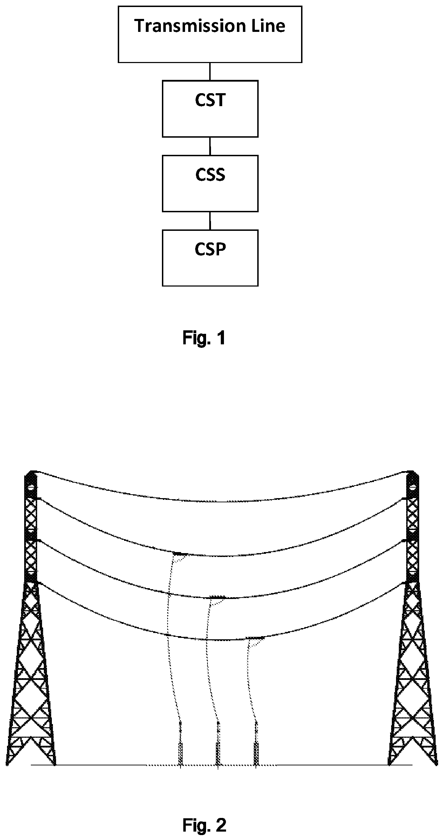

**Figure 1****:** Schematic representation of an embodiment of the disclosed electric vehicle charging station for connecting to a span of a high or extra high voltage transmission line.
**Figure 2****:** Schematic representation of an embodiment of the charging station tap of the disclosed electric vehicle charging station.

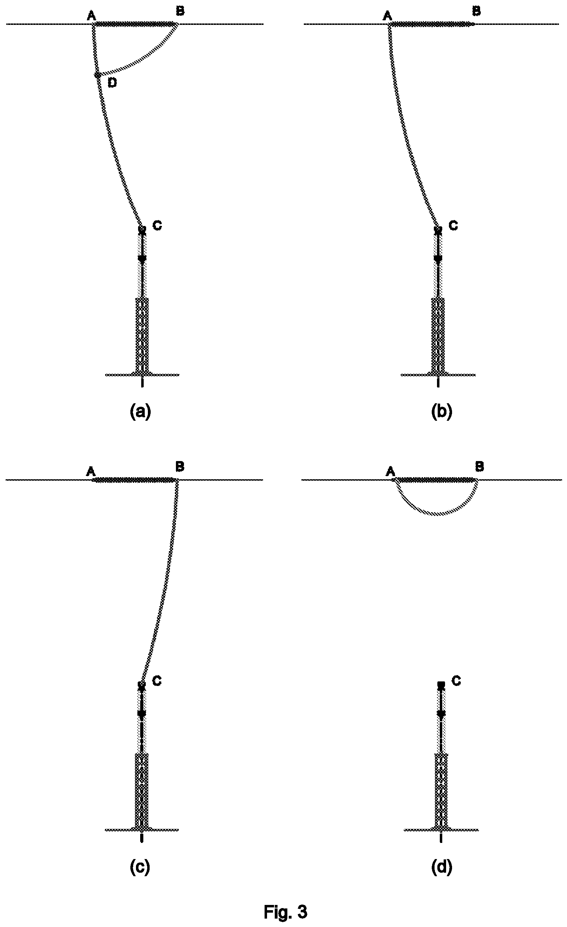

**Figure 3****:** Schematic representation of an embodiment of the charging station tap interrupted conductor point connections of the disclosed electric vehicle charging station.

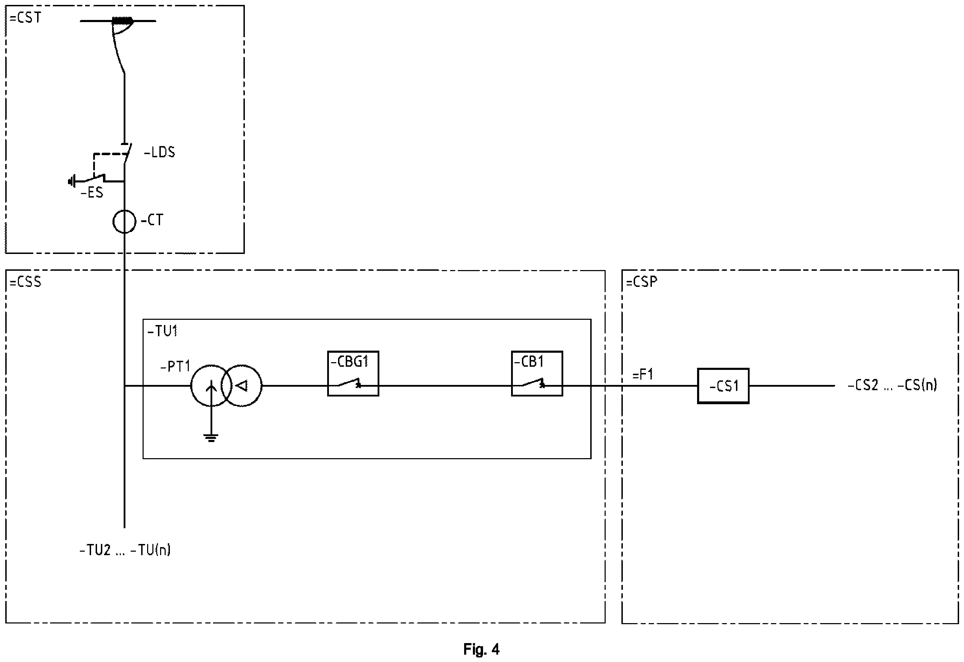

**Figure 4****:** Schematic representation of an electrical layout according to a first embodiment of the charging station tap.

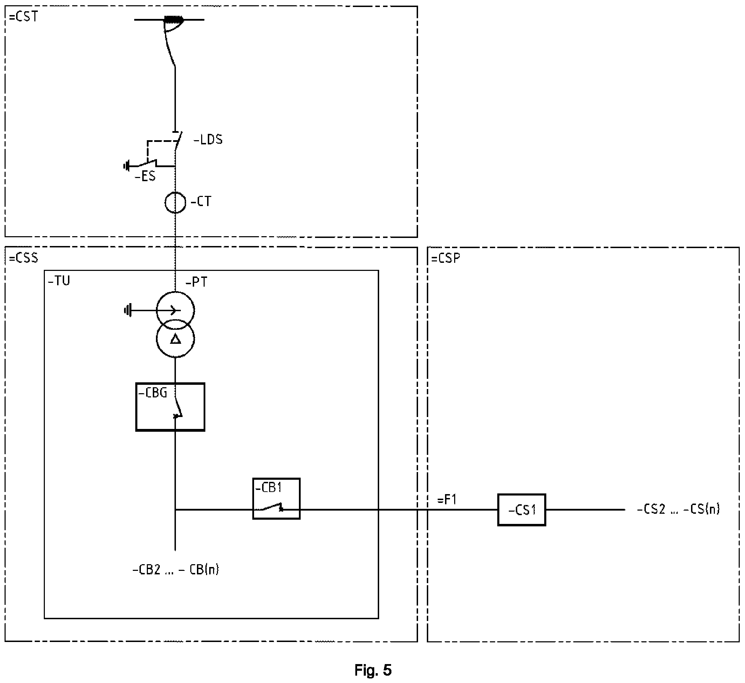

**Figure 5****:** Schematic representation of the electrical layout according to a second embodiment of the charging station tap.

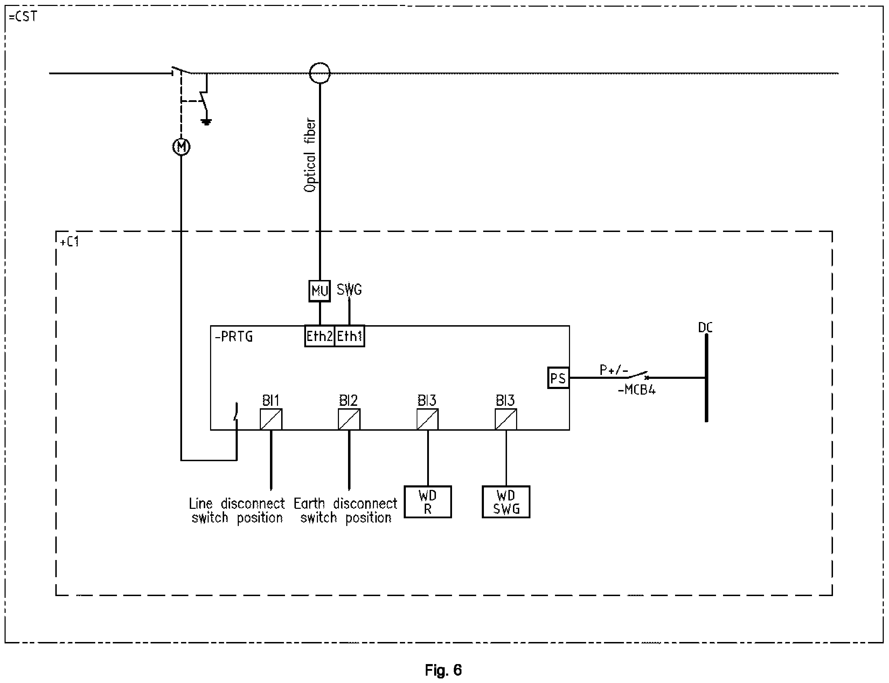

**Figure 6****:** Schematic representation of the electrical layout of the high voltage protection and automation according to a first embodiment of the charging station tap.

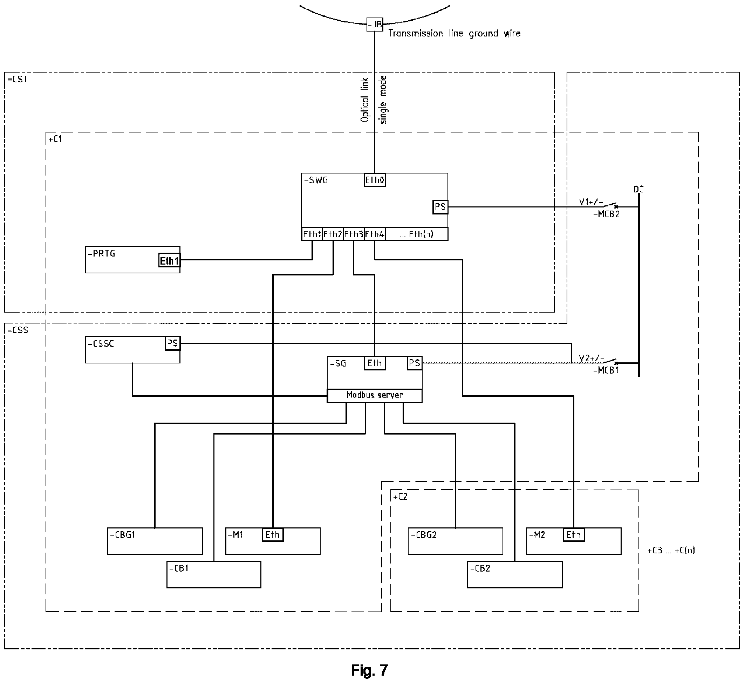

**Figure 7****:** Schematic representation of the layout of the data communication circuits using Modbus Communication and according to a first embodiment of the charging station tap.

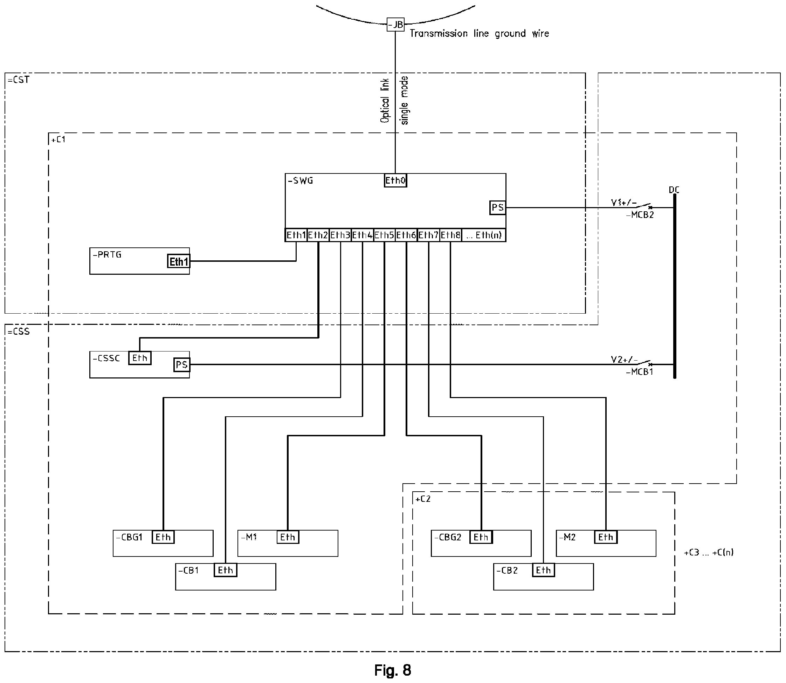

**Figure 8****:** Schematic representation of the layout of data communication circuits using Ethernet Communication and according to a first embodiment of the charging station tap.

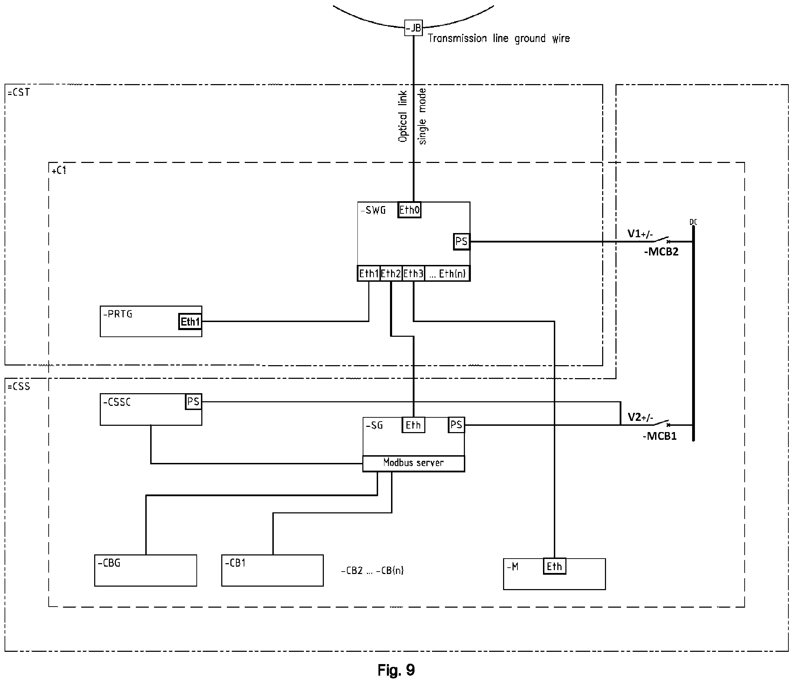

**Figure 9****:** Schematic representation of the layout of data communication circuits using Modbus Communication and according to a second embodiment of the charging station tap.

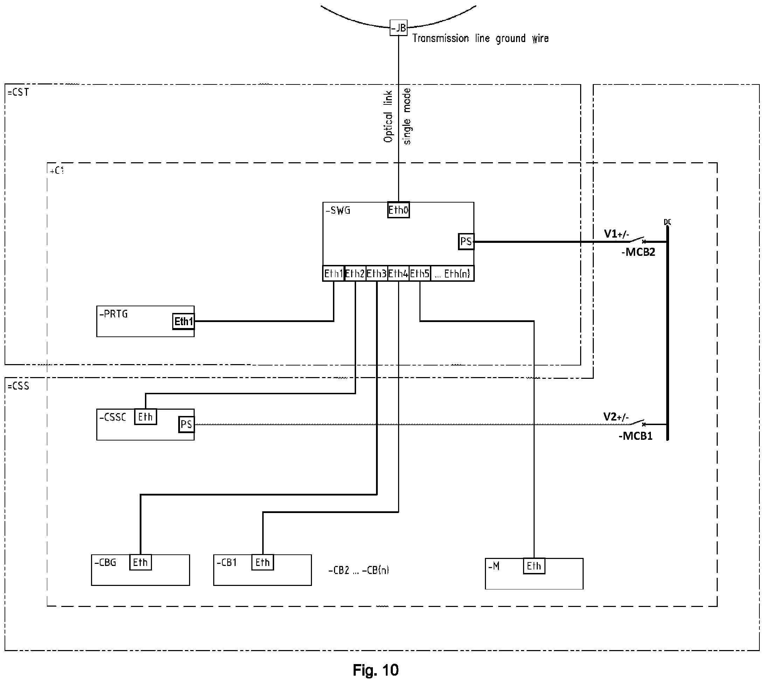

**Figure 10****:** Schematic representation of the layout of the data communication circuits using Ethernet Communication and according to a second embodiment of the charging station tap.

### Detailed Description

The system, according to an embodiment, is arranged into three main parts combined according to the power flow: (1) the charging station tap (CST); (2) the charging station substation (CSS) and; (3) the Charging station park (CSP).

The charging station tap CST preferably includes all high voltage equipment and protection and automation equipment required to safely connect the power transformers to the transmission line and to integrate the high power electric vehicle charging station load into the transmission system. Additionally, it preferably includes the communication links and equipment used to remotely operate and monitor the high power electric vehicle charging station.

The charging station substation CSS preferably includes all power transformers that are part of the high voltage electric vehicle charging station and the several low voltage feeders that will power supply the electric vehicle charging stations. The charging station substation also preferably includes the transformers protection, the low voltage feeder's protection, automation equipment, metering equipment and, the low voltage auxiliary power supply system. Additionally, it preferably includes the local area communication network equipment and communication links. It preferably provides remote communication access to electric vehicle charging stations.

The charging station park CSP includes the electric vehicle charging station loads (CS) connected to the low voltage feeders provided by the CSS. The CS are preferably series connected to each feeder and its number is limited by the feeder maximum power.

The CST is placed at some point in the transmission line span. At this location, an insulation string, connected in between points A and B, interrupts the phase conductors. The insulation string length is defined according to the Basic Insulation Level of the transmission line. A conductor is attached to point A and the first insulation column of the high power electric charging station at point C. The power supply of the high power electric vehicle charging station is made through this conductor. The shunt conductor between point B and D guarantees the transmission line electric continuity.

This tap arrangement allows making maintenance to the transmission line without placing the high power electric vehicle charging station out of service. The maintenance can be made by removing the conductor connecting point B and D. In case the maintenance is made to the transmission line to the right side of point B, the high power electric vehicle charging station is feed by the transmission line located left to point A by maintaining the connection between point A to C. In case the maintenance is made to the transmission line to the left side of point A, the conductor connecting point A and C is detached from point A and attached to point B.

Preparing the transmission line for tapping can be made prior to the high power electric vehicle charging station construction by installing the insulation string and connecting point A to B. The tap circuit is preferably connected to the high power electric vehicle charging station through a motorized line disconnecting switch LDS that is used to electrically isolate the station from the transmission line.

A motorized earthing switch ES is preferably installed close to the LDS to securely earth the station when it is electrically disconnected from the transmission line. In case of maintenance of the LDS, the connection of points A and B ensures the continuity of the operation of the overhead line, during the shutdown of the charging station.

The optical link available in the transmission line ground wire is preferably interrupted at one of the transmission line adjacent towers to the tap point, and it is installed an optical junction box JB at this location. A communication optical link between the high power electric vehicle charging station and each of the transmission line end substations is preferably established at this location. An optical fiber cable is preferably installed connecting the communication switch SWG located in the high power electric vehicle charging station and the junction box. All communications to the high power electric vehicle charging station are preferably made through this switch and link.

The communication switch SWG is preferably used to aggregate the Ethernet communication required for remote access and operation of the high power electric vehicle charging station.

A current transformer CT is preferably installed immediately after the ES to measure the fault current in case a short-circuit occurs in the EHV circuit of CSS or eventually in the power transformers' primary winding. In case the operation principle of the CT is the Faraday Effect, a Merging Unit device is preferably used to provide the protection and automation device PRTG the real-time measurement value according to the IEC 61869-9 standard.

The protection and automation device PRTG is preferably installed in the CST and used for the following purposes:
to remotely open or close the motorized line and earth disconnect switches;
to monitor and supervise the line and earth disconnect switch positions and transmit this information to the transmission line end substations;
to detect a short-circuit in the EHV circuit of CSS or eventually in the power transformers' primary winding, using an overcurrent protection that compares the magnitude of the measured current, with a predefined threshold value. In case of a positive detection, it sends and an autorecloser inhibit command to the transmission line end substations and also blocks the transmission line manual energization;
to supervise the auxiliary power supply status WD Ret.

The protection and automation device PRTG is preferably directly connected through an Ethernet link to the communication switch SWG.

One or more high power electric vehicle charging stations can be tapped to the same transmission line, by properly integrating its operation in the operation of the transmission line.

The high power electric vehicle charging station is preferably placed in service with prior confirmation of the network operator. To preferably place in service the station, both high voltage circuit breakers from the corresponding transmission line bays must be in open position, then the earthing switch ES is firstly opened and secondly the line disconnecting switch LDS is closed.

The high power electric vehicle charging station is placed out of service with prior information to the network operator. To place out of service the station, both high voltage circuit breakers from the transmission line bays must be opened, then the line disconnecting switch LDS is firstly open and secondly the earthing switch ES is close. After these operations, the line can be energized by closing of the high voltage circuit breakers from the transmission line bays.

The operation of the transmission line autoreclose functions at all line ends is preferably conditioned to a permit signal, being permanently sent by the PRTG in all high power electric vehicle charging stations taped to the transmission line. In the absence of at least one these signals, the autoreclose functions are preferably inhibited and no line circuit breaker close command is made after a transmission line fault. The permit signal is preferably suppressed in case the PRTG overcurrent protection operates. The signal is preferably suppressed until it is acknowledged in the tapped high power electric vehicle charging station where the operated PRTG is installed.

Transmission line energization is preferably made with confirmation, from all tapped high power electric vehicle charging stations, that either their line disconnect switch is open, or if closed, receiving from the PRTG the autoreclose permit signal and a supervision signal stating that the device is healthy and in operation.

A first embodiment of the charging station substation includes more than one transformation unit TU. Each unit consists of a power transformer, a low voltage feeder, high power low voltage circuit breakers, protection, automation, and metering equipment.

The winding group of the transformation unit is preferably Yd to minimise the short-circuit current magnitude in a phase to ground fault. Additionally, it blocks all zero sequence harmonics of voltage and current, i.e. 3^{rd}, 6^{th}, 9^{th}, etc. that flow from the low voltage to the EHV networks and vice versa.

Alternatively, the winding group of the transformation unit is preferably Yyn for systems that require a neutral connection in the low voltage circuit.

The high power low voltage circuit breaker CBGi, being i the transformation unit number, is the main protection device of the low voltage circuit. This includes time delay and instantaneous overcurrent protection functions and overvoltage protection function. Remote operation of the CBGi is also possible by means of serial or Ethernet communication, depending on the protocol used.

In case the low voltage circuit breaker CBGi uses a serial communication protocol, it connects to the server gateway SG to facilitate the serial communication to the Ethernet communication provided by the communication switch SWG. Otherwise, the low voltage circuit breaker CBGi directly connects to the communication switch SWG.

A metering device Mi measures all consumed load connected to bus Bi. This includes the feeder Fi load and the auxiliary power supply load ASPi. Being i the transformation unit number.

The metering device Mi are directly connected through an Ethernet link to the communication switch SWG.

The high power low voltage circuit breaker CBi, being i the transformation unit number, is the dedicated circuit breaker of feeder i. The feeder supplies a set of charging stations located in the charging station park. This includes time delay and instantaneous overcurrent protection functions. Remote operation of CBi is also possible by means of serial or Ethernet communication, depending on the protocol used.

In case the low voltage circuit breaker CBi uses a serial communication protocol, it connects to the server gateway SG to facilitate the serial communication to the Ethernet communication provided by the communication switch SWG. Otherwise, the low voltage circuit breaker CBi directly connects to the communication switch SWG.

The management of the low voltage circuit breakers CBGi and CBi is made by the contololler CSSC. Remote access and operation of the contololler CSSC is possible by means of serial or Ethernet communication, depending on the protocol used.

In case the controller CSSC uses a serial communication protocol, it connects to the server gateway SG to facilitate the serial communication to the Ethernet communication provided by the communication switch SWG. Otherwise, the low voltage circuit breaker CBi directly connects to the communication switch SWG and the CSSC directly connects to the communication switch SWG.

The auxiliary power supply unit ASPU includes an AC/DC converter R and the corresponding DC battery BAT, to provide DC power to all protection, automation and metering devices installed in the high power electric vehicle charging station. The input bus BAC connects to all transformation units busses Bi by the circuits APSi. In normal operation, only one APSi circuit is connected to bus BAC, and all the others are open. In case this circuit becomes unavailable, bus BAC will be power supplied by one of the other available ASPi. The output bus BDC provides DC voltage, protected by dedicated mini circuit breakers MCBj, being j the circuit number, to the following needs:
Communication switch power supply V1 +/-
Controller CSSC and server gateway power supply V2 +/-
Protection and automation device PRTG power supply P+/-
Line and earth disconnect switch mechanical power supply C+/-

A second embodiment of the charging station substation includes one transformation unit TU, including a power transformer, a low voltage feeder, high power low voltage circuit breakers, protection, automation, and metering equipment.

The winding group of the transformation unit is preferably Yd to minimise the short-circuit current magnitude in a phase to ground fault. Additionally, it blocks all zero sequence harmonics of voltage and current, i.e. 3^{rd}, 6^{th}, 9^{th}, etc. that flow from the low voltage to the EHV networks and vice versa.

The high power low voltage circuit breaker CBG is the main protection device of the low voltage circuit. This includes time delay and instantaneous overcurrent protection functions and overvoltage protection function. Remote operation of the CBG is also possible by means of serial or Ethernet communication, depending on the protocol used.

In case the low voltage circuit breaker CBG uses a serial communication protocol, it connects to the server gateway SG to facilitate the serial communication to the Ethernet communication provided by the communication switch SWG. Otherwise, the low voltage circuit breaker CBG directly connects to the communication switch SWG.

A metering device M measures all consumed load connected to bus B. This includes the feeders Fi load, being i the feeder number, and the auxiliary power supply load ASP.

The metering device M is directly connected through an Ethernet link to the communication switch SWG.

The high power low voltage circuit breaker CBi, being i the feeder number, is the dedicated circuit breaker of feeder i. The feeder supplies a set of charging stations located in the charging station park. This includes time delay and instantaneous overcurrent protection functions. Remote operation of CBi is also possible by means of serial or Ethernet communication, depending on the protocol used.

In case the low voltage circuit breaker CBi uses a serial communication protocol, it connects to the server gateway SG to facilitate the serial communication to the Ethernet communication provided by the communication switch SWG. Otherwise, the low voltage circuit breaker CBi directly connects to the communication switch SWG.

The management of the low voltage circuit breakers CBGi and CBi is made by the contololler CSSC. Remote access and operation of the controller CSSC is possible by means of serial or Ethernet communication, depending on the protocol used.

In case the controller CSSC uses a serial communication protocol, it connects to the server gateway SG to facilitate the serial communication to the Ethernet communication provided by the communication switch SWG. Otherwise, the low voltage circuit breaker CBi directly connects to the communication switch SWG and the CSSC directly connects to the communication switch SWG.

The auxiliary power supply unit APSU includes an AC/DC converter R and the corresponding DC battery BAT, to provide DC power supply to all protection, automation and metering devices installed in the high power electric vehicle charging station. The output bus BDC provides DC voltage, protected by dedicated mini circuit breakers MCBj, being j the circuit number, to the following needs:
Communication switch power supply V1 +/-
Controller CSSC and server gateway power supply V2 +/-
Protection and automation device PRTG power supply P+/-
Line and earth disconnect switch mechanical power supply C+/-

The electric vehicle charging stations CSi, being i the charging station number, are installed in the charging station park, radially distributed by feeders. The charging stations CSi are power supplied by the AC voltage provided in each feeder. The CSi technology, being dependent on the CSi manufacture, do not affect the high power electric vehicle charging station system. The CSi input voltage tolerance is preferably, at least, 400 V +/-15%. Remote access to the CSi is possible through Ethernet communication that is provided by the CSS.

The disclosure should not be seen in any way restricted to the embodiments described and a person with ordinary skill in the art will foresee many possibilities to modifications thereof. The above described embodiments are combinable. The following claims further set out particular embodiments of the disclosure.

## Claims

1. An electric vehicle charging station comprising a span of a high or extra high voltage transmission line of 60 kV to 800 kV, also comprising:
a tap (CST) connected to the span of the transmission line;
a substation (CSS) fed from said tap comprising one or more power voltage transformers for transforming the high or extra high voltage to a low voltage below 1 kV for feeding electric vehicle chargers;
one or more electric vehicle chargers (CSP) fed from said substation;
wherein the one or more power voltage transformers is arranged to supply low voltage receiving power directly from the high voltage transmission line, bypassing medium voltage network distribution.

2. The electric vehicle charging station according to any of the previous claims, wherein the one or more power voltage transformers are station service voltage transformers, auxiliary service voltage transformers, or power VTs.

3. The electric vehicle charging station according to any of the previous claims, wherein said power voltage transformers comprise a three-phase star-delta power voltage transformers or a three-phase star-star power voltage transformers.

4. The electric vehicle charging station according to any of the previous claims, wherein said power voltage transformers comprise a set of three one-phase power voltage transformers connected as star-delta or a set of three one-phase power voltage transformers connected as star-star.

5. The electric vehicle charging station according to any of the previous claims, wherein said transmission line comprises one or more phases and said tap comprises, for each phase of the transmission line:
an insulator linking a first and a second interrupted conductor points of an interrupted transmission line conductor;
a drop conductor connected between the first interrupted conductor point and said substation;
a shunt connector arranged to be connectable between the second interrupted conductor point and a point of the drop conductor, or between the first and second interrupted conductor points.

6. The electric vehicle charging station according to the previous claim, wherein said tap is arranged such that, by overhead power line maintenance operation, the substation-connected drop conductor is switchable:
from being connected with the first interrupted conductor point,
to being connected with the second interrupted conductor point,
and vice-versa.

7. The electric vehicle charging station according to the previous claim, wherein said tap is arranged such that, by overhead power line maintenance operation, the shunt conductor is switchable:
from being connected between the second interrupted conductor point and a point of the drop conductor,
to being connected between the first and second interrupted conductor points, or
to being disconnected and removed from said tap.

8. The electric vehicle charging station according to any of the previous claims, wherein said transmission line comprises one or more phases and said tap comprises, for each phase of the transmission line:
an insulator linking a first and a second interrupted conductor points of an interrupted transmission line conductor;
a drop conductor connected between the first interrupted conductor point and said substation;
a shunt connector arranged such that, when connected, the interrupted parts of the transmission line conductor are connected between each other, and, when disconnected or removed, the interrupted parts of the transmission line conductor are disconnected between each other.

9. The electric vehicle charging station according to any of the previous claims, comprising a line disconnect switch between the transmission line and the tap, for connecting and disconnecting the substation from the high or extra high voltage transmission line when required, independently of the transmission line being energised or not.

10. The electric vehicle charging station according to any of the previous claims, comprising a motorized earthing switch for securely earthing the charging station when it is electrically disconnected from the transmission line.

11. The electric vehicle charging station according to any of the previous claims, comprising a current transformer for measuring the fault current in case of short-circuit in the high or extra high voltage part of the charging station.

12. The electric vehicle charging station according to any of the claims 5-8, comprising an optical link interruption device for mounting in a transmission line tower adjacent to the tap span of the transmission line, wherein said device comprises a data communication optical link for linking the charging station and both ends of an interrupted optical link embedded in an interrupted earth conductor of a transmission line.

13. The electric vehicle charging station according to any of the previous claims, comprising protection equipment for protecting the charging station from electrical faults, protection equipment for protecting the transmission line from electrical faults of the charging station, and/or protection equipment for protecting the electric vehicle chargers from electrical faults.

14. Method of operating the electric vehicle charging station according to any of the previous claims, comprising the steps of:
feeding the substation from said tap to feed said one or more power voltage transformers for transforming the high or extra high voltage to a low voltage for feeding the electric vehicle charger or chargers;
feeding the one or more of electric vehicle chargers fed from said substation.

15. Method according to the previous claim, comprising the step of:
closing or opening a line disconnect switch between the transmission line and the substation for respectively connecting or disconnecting the substation from the high or
extra high voltage transmission line, independently of the transmission line being energised or not.

## Patentansprüche

1. Eine Ladestation für Elektrofahrzeuge, umfassend ein Spannfeld einer Hoch- oder Höchstspannungsübertragungsleitung mit 60 kV bis 800 kV, ebenfalls umfassend:
eine Abzweigung (CST), die mit dem Spannfeld der Übertragungsleitung verbunden ist;
eine Unterstation (CSS), die über die genannte Abzweigung versorgt wird, umfassend einen oder mehrere Leistungstransformatoren zur Umwandlung der Hoch- oder Höchstspannung in eine Niederspannung unter 1 kV zur Versorgung von Ladegeräten für Elektrofahrzeuge;
ein oder mehrere Ladegeräte für Elektrofahrzeuge (CSP), die von der genannten Unterstation versorgt werden;
wobei der oder die Leistungstransformatoren so angeordnet sind, dass sie Niederspannung bereitstellen und Energie direkt von der Hochspannungsübertragungsleitung beziehen, unter Umgehung der Verteilung aus dem Mittelspannungsnetz.

2. Die Ladestation für Elektrofahrzeuge nach einem der vorangehenden Ansprüche, wobei der oder die Leistungstransformatoren Transformatoren für Stationsbetrieb, Transformatoren für Hilfsbetrieb oder Leistungstransformatoren sind.

3. Die Ladestation für Elektrofahrzeuge nach einem der vorangehenden Ansprüche, wobei die genannten Leistungstransformatoren einen Dreiphasenleistungstransformator mit Stern-Dreieck-Schaltung oder einen Dreiphasenleistungstransformator mit Stern-Stern-Schaltung umfassen.

4. Die Ladestation für Elektrofahrzeuge nach einem der vorangehenden Ansprüche, wobei die genannten Leistungstransformatoren einen Satz von drei Einphasenleistungstransformatoren mit Stern-Dreieck-Schaltung oder einen Satz von drei Einphasenleistungstransformatoren mit Stern-Stern-Schaltung umfassen.

5. Die Ladestation für Elektrofahrzeuge nach einem der vorangehenden Ansprüche, wobei die genannte Übertragungsleitung eine oder mehrere Phasen umfasst und die genannte Abzweigung für jede Phase der Übertragungsleitung umfasst:
einen Isolator, der einen ersten und einen zweiten unterbrochenen Leiterpunkt eines unterbrochenen Stromleiters der Übertragunsleitung verbindet;
eine Stichleitung, die zwischen dem ersten unterbrochenen Leiterpunkt und der genannten Unterstation angeschlossen ist;
ein Nebenschluss (Shunt), der so angeordnet ist, dass er zwischen dem zweiten unterbrochenen Leiterpunkt und einem Punkt der Stichleitung oder zwischen dem ersten und zweiten unterbrochenen Leiterpunkt angeschlossen werden kann.

6. Die Ladestation für Elektrofahrzeug nach dem vorangehenden Anspruch, wobei die genannte Abzweigung so angeordnet ist, dass die an die Unterstation angeschlossene Stichleitung bei Wartungsarbeiten an der Freileitung schaltbar ist:
von einem Anschluss an den ersten unterbrochenen Leiterpunkt
auf einen Anschluss mit dem zweiten unterbrochenen Leiterpunkt
und umgekehrt.

7. Die Ladestation für Elektrofahrzeuge nach dem vorangehenden Anspruch, wobei die genannte Abzweigung so angeordnet ist, dass der Nebenschluss (Shunt) bei Wartungsarbeiten an der Freileitung schaltbar ist:
von einem Anschluss zwischen dem zweiten unterbrochenen Leiterpunkt und einem Punkt der Stichleitung
zu einem Anschluss zwischen dem ersten und dem zweiten unterbrochenen Leiterpunkt, oder
von der genannten Abzweigung getrennt und entfernt wird.

8. Die Ladestation für Elektrofahrzeuge nach einem der vorangehenden Ansprüche, wobei die genannte Übertragungsleitung eine oder mehrere Phasen umfasst und die genannte Abzweigung für jede Phase der Übertragungsleitung umfasst:
einen Isolator, der einen ersten und einen zweiten unterbrochenen Leiterpunkt eines unterbrochenen Stromleiters der Übertragungsleitung verbindet;
eine Stichleitung, die zwischen dem ersten unterbrochenen Leiterpunkt und der genannten Unterstation angeschlossen ist;
ein Nebenschluss (Shunt), der so angeordnet ist, dass, wenn angeschlossen, die unterbrochenen Teile des Stromleiters der Übertrangungsleitung miteinander verbunden sind, und, wenn getrennt oder entfernt, die unterbrochenen Teile des Stromleiters der Übertrangungsleitung voneinander getrennt sind.

9. Die Ladestation für Elektrofahrzeuge nach einem der vorangehenden Ansprüche, umfassende einen Leitungstrennschalter zwischen der Übertragungsleitung und der Abzweigung, um die Unterstation mit bzw. von der Hoch- oder Höchstspannungsübertragungsleitung zu verbinden oder zu trennen, unabhängig davon, ob die Spannungsleitung unter Spannung steht oder nicht.

10. Die Ladestation für Elektrofahrzeuge nach einem der vorangehenden Ansprüche, umfassend einen motorisierten Erdungsschalter zur sicheren Erdung der Ladestation, wenn diese elektrisch von der Übertragungsleitung getrennt ist.

11. Die Ladestation für Elektrofahrzeuge nach einem der vorangehenden Ansprüche, umfassend einen Stromwandler zur Messung des Fehlerstroms im Falle eines Kurzschlusses im Hoch- oder Höchstspannungsteil der Ladestation.

12. Die Ladestation für Elektrofahrzeuge nach einem der Ansprüche 5 bis 8, umfassend eine optische Unterbrechungsvorrichtung zur Installation an einem an das Spannfeld der Abzweigung angrenzenden Masten der Übertragungsleitung, wobei die genannte Vorrichtung eine optische Verbindung zur Datenübertragung für die Verbindung der Ladestation und beider Enden einer unterbrochenen optischen Verbindung umfasst, die in einen unterbrochenen Erdleiter einer Übertragungsleitung integriert ist.

13. Die Ladestation für Elektrofahrzeug nach einem der vorangehenden Ansprüche, umfassend Schutzeinrichtungen zum Schutz der Ladestation vor elektrischen Störungen, Schutzeinrichtungen zum Schutz der Übertragungsleitung vor elektrischen Störungen der Ladestation und/oder Schutzeinrichtungen zum Schutz der Ladegeräte der Elektrofahrzeug vor elektrischen Störungen.

14. Betriebsverfahren der Ladestation für Elektrofahrzeuge nach einem der vorangehenden Ansprüche, umfassend die Schritte:
Versorgung der Unterstation über die genannte Abzweigung zur Versorgung von einem oder mehreren Leistungstransformatoren zur Umwandlung der Hoch- oder Höchstspannung in eine Niederspannung zur Versorgung des oder der Ladegeräte für Elektrofahrzeuge;
Versorgung des oder der Ladegeräte für Elektrofahrzeuge über die genannte Unterstation.

15. Verfahren nach dem vorangehenden Anspruch, umfassend den Schritt:
Schließen oder Öffnen eines Leitungstrennschalters zwischen der Übertragungsleitung und der Unterstation, um die Unterstation mit bzw. von der Hoch- oder Höchstspannungsübertragungsleitung zu verbinden oder zu trennen, unabhängig davon, ob die Spannungsleitung unter Spannung steht oder nicht.

## Revendications

1. Une station de charge de véhicule électrique comprenant une travée de ligne de transmission haute ou extra haute tension de 60 kV à 800 kV, comprenant également :
une dérivation (CST) connectée à la travée de la ligne de transmission;
une sous-station (CSS) alimentée à partir de ladite dérivation comprenant un ou plusieurs transformateurs de tension pour transformer la haute ou extra haute tension en basse tension inférieure à 1 kV pour alimenter les chargeurs de véhicule électrique;
un ou plusieurs chargeurs de véhicule électrique (CSP) alimenté(s) à partir de ladite sous-station;
dans lequel le ou les transformateur(s) de tension est(sont) arrangé(s) pour fournir de la basse tension recevant l'énergie directement de la ligne de transmission de haute tension, contournant la distribution de réseau de moyenne tension.

2. La station de charge de véhicule électrique selon l'une quelconque des revendications précédentes, dans laquelle le ou les transformateurs de tension sont des transformateurs de tension de station-service, des transformateurs de tension de service auxiliaire, ou des TT de puissance.

3. La station de charge de véhicule électrique selon l'une quelconque des revendications précédentes, dans laquelle lesdits transformateurs de tension comprennent des transformateurs de tension étoile-triangle à trois phases ou des transformateurs de tension étoile-étoile à trois phases.

4. La station de charge de véhicule électrique selon l'une quelconque des revendications précédentes, dans laquelle lesdits transformateurs de tension comprennent un ensemble de trois transformateurs de tension à une phase connectés en étoile-triangle ou un ensemble de trois transformateurs de tension à une phase connectés en étoile-étoile.

5. La station de charge de véhicule électrique selon l'une quelconque des revendications précédentes, dans laquelle ladite ligne de transmission comprend une ou plusieurs phases et ladite dérivation comprend, pour chaque phase de la ligne de transmission :
un isolant liant un premier et un second point conducteur interrompu d'un conducteur de ligne de transmission interrompu ;
un conducteur de réduction connecté entre le premier point conducteur interrompu et ladite sous-station;
un connecteur à shunts arrangé pour pouvoir être connecté entre le second point conducteur interrompu et un point du conducteur de réduction, ou entre le premier et le second point conducteur interrompu.

6. La station de charge de véhicule électrique selon la revendication précédente, dans laquelle ladite dérivation est arrangée telle que, à travers une opération d'entretien de la ligne électrique aérienne, le conducteur de réduction connecté à la sous-station soit commutable :
d'une connexion au premier point conducteur interrompu,
à une connexion au second point conducteur interrompu,
et vice-versa.

7. La station de charge de véhicule électrique selon la revendication précédente, dans laquelle ladite dérivation est arrangée telle que, à travers une opération d'entretien de la ligne électrique aérienne, le conducteur à shunts soit commutable :
d'une connexion entre le second point conducteur interrompu et un point du conducteur de réduction,
à une connexion entre le premier et le second point conducteur interrompu, ou
à une déconnexion et retrait de ladite dérivation.

8. La station de charge de véhicule électrique selon l'une quelconque des revendications précédentes, dans laquelle ladite ligne de transmission comprend une ou plusieurs phases et ladite dérivation comprend, pour chaque phase de la ligne de transmission :
un isolant liant un premier et un second point conducteur interrompu d'un conducteur de ligne de transmission interrompu;
un conducteur de réduction connecté entre le premier point conducteur interrompu et ladite sous-station;
un connecteur à shunts arrangé tel que, lorsqu'il est connecté, les parties interrompues du conducteur de la ligne de transmission sont connectées entre elles, et, lorsqu'il est déconnecté ou retiré, les parties interrompues du conducteur de la ligne de transmission sont déconnectées entre elles.

9. La station de charge de véhicule électrique selon l'une quelconque des revendications précédentes, comprenant un sectionneur de ligne entre la ligne de transmission et la dérivation, pour connecter et déconnecter la sous-station de la ligne de transmission haute ou extra haute tension lorsque nécessaire, indépendamment du fait que la ligne soit électrifiée ou pas.

10. La station de charge de véhicule électrique selon l'une quelconque des revendications précédentes, comprenant un sectionneur de terre motorisé pour mettre la station de charge à la terre en sécurité lorsqu'elle est électriquement déconnectée de la ligne de transmission.

11. La station de charge de véhicule électrique selon l'une quelconque des revendications précédentes, comprenant un transformateur de courant pour mesurer le courant de défaut en cas de court-circuit dans la partie à haute ou extra haute tension de la station de charge.

12. La station de charge de véhicule électrique selon l'une quelconque des revendications 5-8, comprenant un dispositif d'interruption de connexion optique à monter sur une tour de ligne de transmission adjacente à la travée de la dérivation de la ligne de transmission, dans laquelle le dispositif comprend une connexion optique de communication de données pour connecter la station de charge et les deux extrémités d'une connexion optique interrompue intégrées dans un conducteur de terre interrompu d'une ligne de transmission.

13. La station de charge de véhicule électrique selon l'une quelconque des revendications précédentes, comprenant des équipements de protection pour protéger la station de charge de défauts électriques, équipements de protection pour protéger la ligne de transmission de défauts électriques de la station de charge, et/ou équipements de protection pour protéger les chargeurs de véhicule électrique de défauts électriques.

14. Procédé d'opération de la station de charge de véhicule électrique selon l'une quelconque des revendications précédentes, comprenant les étapes de :
alimenter la sous-station à partir de ladite dérivation pour alimenter un ou plusieurs transformateurs de tension pour transformer la haute ou extra haute tension en une basse tension pour alimenter le chargeur ou les chargeurs de véhicule électrique;
alimenter le ou les chargeur(s) de véhicule électrique alimenté(s) à partir de ladite sous-station.

15. Procédé selon la revendication précédente, comprenant l'étape de :
fermer ou ouvrir un sectionneur de ligne entre la ligne de transmission et la sous-station pour connecter ou déconnecter respectivement la sous-station de la ligne de transmission haute ou extra haute tension, indépendamment du fait que la ligne soit électrifiée ou pas.
